# EUROPÄISCHE PATENTSCHRIFT

(11) **EP 3 533 320 B1**
(45) Veröffentlichungstag und Bekanntmachung des Hinweises auf die Patenterteilung: **18.08.2021**
(21) Anmeldenummer: 18159217.1
(22) Anmeldetag: 28.02.2018
(51) Int. Cl.: A01G 9/24, A01G 31/06

(54) **RAUM UND VERFAHREN ZUR KULTIVIERUNG**
ROOM AND METHOD FOR CULTIVATION
ESPACE ET PROCÉDÉ DE CULTURE

(43) Veröffentlichungstag der Anmeldung: 04.09.2019
(73) Patentinhaber: Weiss Technik GmbH, 35447 Reiskirchen (DE)
(72) Erfinder: Taylor, Garry, Great Glen, Leicestershire LE89GN (GB)
(74) Vertreter: advotec.

(56) Entgegenhaltungen:
- WO-A1-2016/181699
- CN-U- 204 907 354
- JP-A- H10 295 198
- JP-A- 2012 217 392
- JP-B2- 6 280 313
- US-A1- 2016 366 838

## Beschreibung

Die Erfindung betrifft einen Raum und ein Verfahren zur Kultivierung biologischer Organismen, wie Pflanzen, Insekten, maritime Lebewesen oder dergleichen, mit einer Klimavorrichtung zur Konditionierung einer Raumluft und zumindest einem in einem Innenraum des Raums angeordnetes Regal, wobei mittels der Klimavorrichtung eine vertikale Zuluftströmung in dem Innenraum ausbildbar ist, wobei das Regal aus einem Gestell aus vertikal angeordneten Ständern und einer Mehrzahl von an den Ständern horizontal in einem Abstand übereinander angeordneten Tablaren zur Aufnahme von Organismen ausgebildet ist, wobei das Regal derart offen ausgebildet ist, dass die Raumluft durch einen jeweils von den Tablaren begrenzten Aufnahmeraum für die Organismen strömen kann.

Derartige Räume zur Kultivierung biologischer Organismen sind hinreichend bekannt und werden zur Aufzucht von Pflanzen in auf den Tablaren angeordneten Pflanzbehältern, Insekten, die in Käfigen auf den Tablaren angeordnet sind, oder maritimen Lebewesen, wie Wasserpflanzen, Fischen oder dergleichen in geeigneten Behältern, verwendet. Die Anordnung dieser biologischen Organismen auf einem Regal dient dazu, eine große Anzahl biologischer Organismen in den Raum verbringen zu können, wobei das Auffüllen und Entleeren der Regale einfach außerhalb oder innerhalb des Raums erfolgen kann. Der Raum kann in Art eines sogenannten Gewächshauses mit verglasten bzw. teilverglasten Raumbegrenzungsflächen oder auch mit nicht optisch transparenten Wänden ausgebildet sein, wobei dann eine entsprechende Beleuchtung der biologischen Organismen künstlich erfolgt. Im Wesentlichen dient der Raum dazu, die biologischen Organismen unter definierten klimatischen Bedingungen, die an die Bedürfnisse der betreffenden Organismen möglichst optimal angepasst sind, zu kultivieren, so dass eine möglichst große Anzahl biologischer Organismen in kurzer Zeit in dem Raum wachsen kann. Die Klimavorrichtung dient dabei zur Konditionierung einer Raumluft in dem Innenraum des Raums, wobei in der Regel mit der Klimavorrichtung eine vertikale Zuluftströmung in dem Innenraum ausgebildet wird, so dass Zuluft bzw. Frischluft stetig zu den Organismen gelangen kann. Es ist aus der Pflanzenphysiologie hinreichend bekannt, dass die Strömungsgeschwindigkeit und -richtung der Raumluft einen starken Effekt auf die Wassertranspiration und den Gaswechsel der Blätter hat. Änderungen in Richtung und Intensität der Strömungsgeschwindigkeit der Raumluft haben daher eine starken Effekt auf das Pflanzenwachstum. Ähnliches gilt für andere Organsimen wie z.B. Insekten, z.B. Mücken, die in Abhängigkeit der Strömungsgeschwindigkeit der Raumluft ihr Flugverhalten ändern. Eine Regulierung der Strömungsgeschwindigkeit der Raumluft ist daher sehr wünschenswert.

Da ein derartiger Raum aus Kostengründen möglichst dicht mit stationären oder mobilen Regalen oder Wagen befüllt wird, besteht das Problem, dass nicht alle in den Regalen befindlichen Organismen über die vertikale Zuluftströmung in dem Innenraum mit Frischluft bzw. Raumluft befriedigend versorgt werden können. Vielmehr strömt die Zuluft bzw. Raumluft ungeregelt und mehr oder weniger ausreichend durch die Regale und versorgt die auf den Tablaren angeordneten Organismen entsprechend mehr oder weniger gut.

Um einen verbesserten Durchsatz an Raumluft durch die Regale zu erzielen, ist es bekannt, die Raumwände oder Decken beispielsweise mit einer Perforation zu versehen. Weiter können an den Gestellen der Regale vertikale, perforierte Wände oder auch innerhalb des Innenraums Wände oder Kanäle in Form von Textilschläuchen zur verbesserten Verteilung der Zuluftströmung in dem Innenraum angeordnet sein. Diese Maßnahmen sind jedoch sehr kostenaufwändig und können nicht flexibel an geänderte Anforderungen angepasst werden, wenn zum Beispiel unterschiedlichste Pflanzen in dem Raum kultiviert werden sollen.

Die WO 2016/181699 A1 offenbart einen Raum zur Kultivierung biologischer Organismen, mit einer Klimavorrichtung zur Konditionierung einer Raumluft und zwei in einem Innenraum des Raums angeordneten Regalen, wobei mittels der Klimavorrichtung eine vertikale Zuluftströmung in den Innenraum ausgebildet werden kann. Jedes der Regale umfasst eine Mehrzahl von Kultivierungseinheiten, welche mit jeweils einem Ventilator und mit mehreren Beleuchtungseinrichtungen ausgestattet sind. Weiter weisen die Kultivierungseinheiten jeweils eine erste Wand sowie eine zweite Wand derart auf, dass Zuluft durch eine Öffnung in der ersten Wand in einen Innenraum der Kultivierungseinheiten gelangen und von dort mittels der Ventilatoren in einen Bereich geführt werden kann.

Einen weiteren Raum zur Kultivierung biologischer Organismen ist aus der JP 2012-217392 A ersichtlich. Hier wird mittels einer Klimavorrichtung, welche auf einem Boden des Raums angeordnet ist, eine horizontale Zuluftströmung in einem Innenraum des Raums ausgebildet. Dabei strömt Luft zunächst in einen ersten Bereich und von dort durch einen Aufnahmeraum von übereinander angeordneten Kultivierungseinheiten hindurch in einen zweiten Bereich. Sodann strömt die Luft in dem zweiten Bereich vertikal nach oben und verlässt den Raum durch eine Öffnung in einer Decke des Raums.

Aus der JP 6280313 B2 ist eine Kultivierungseinheit bekannt, welche eine Klimavorrichtung sowie mit der Klimavorrichtung verbundene Regale zur Aufnahme von biologischen Organismen umfasst. Die Klimavorrichtung ihrerseits weist ein Gebläse, einen Luftkanal, Öffnungen sowie Luftleitplatten auf. Eine von dem Gebläse ausgebildete vertikale Luftströmung gelangt dann in den Luftkanal und wird von dort mittels der Luftleitplatten horizontal umgelenkt und strömt durch die Öffnungen hindurch in Aufnahmeräume der Regale.

Der vorliegenden Erfindung liegt daher die Aufgabe zugrunde, einen Raum und ein Verfahren zur Kultivierung biologischer Organismen vorzuschlagen, der bzw. das mit einfachen Mitteln eine verbesserte Luftversorgung ermöglicht.

Diese Aufgabe wird durch einen Raum mit den Merkmalen des Anspruchs 1 und ein Verfahren mit den Merkmalen des Anspruchs 19 gelöst.

Der erfindungsgemäße Raum zur Kultivierung biologischer Organismen, wie Pflanzen, Insekten, maritime Lebewesen oder dergleichen, umfasst eine Klimavorrichtung zur Konditionierung einer Raumluft und zumindest einen in einem Innenraum des Raums angeordneten Regal, wobei mittels der Klimavorrichtung eine vertikale Zuluftströmung in dem Innenraum ausbildbar ist, wobei das Regal aus einem Gestell aus vertikal angeordneten Ständern und einer Mehrzahl von an den Ständern horizontal in einem Abstand übereinander angeordneten Tablaren zur Aufnahme von Organismen ausgebildet ist, wobei das Regal derart offen ausgebildet ist, dass die Raumluft durch einen jeweils von den Tablaren begrenzten Aufnahmeraum für die Organismen strömen kann, wobei das Regal eine Strömungsführungseinrichtung aufweist, mittels der die vertikale Zuluftströmung zumindest teilweise in eine horizontale Luftströmung in dem Aufnahmeraum umlenkbar ist, wobei die Strömungsführungseinrichtung aus einem Flügel ausgebildet ist, der an dem Regal befestigt ist, wobei der Flügel über ein seitliches Ende des Tablars und/oder seitliche Abmessungen des Gestells hinaus in den Innenraum ragt.

Dadurch, dass an dem Regal eine Strömungsführungseinrichtung vorgesehen ist, wird es möglich, mittels der Strömungsführungseinrichtung die vertikale Zuluftströmung umzulenken und in den Aufnahmeraum zu leiten, so dass eine horizontale Luftströmung in dem Aufnahmeraum ausgebildet wird. Je nach Anzahl der Tablare, die beispielsweise mit Behältern mit Organismen bestückt sein können, kann dann auch in jedem Aufnahmeraum, der sich oberhalb eines Tablars befindet, eine horizontale Luftströmung ausgebildet werden. Die vertikale Luftströmung wird demnach in eine Anzahl horizontaler Luftströmungen aufgeteilt bzw. umgelenkt. So ist es möglich, die in dem Regal befindlichen Organismen weitestgehend gleichmäßig mit von der Klimavorrichtung konditionierter Raumluft zu versorgen. Auf eine Perforation von Tablaren oder eine Anordnung von vertikalen Wandabschnitten in dem Innenraum kann dann verzichtet werden. Dadurch, dass die Strömungsführungseinrichtung an dem Regal angeordnet ist, wird es auch möglich, die Strömungsführungseinrichtung an die Erfordernisse der auf den jeweiligen Regal befindlichen Organismen anzupassen, so dass an dem Raum bzw. innerhalb des Innenraums keine Veränderungen zur Ausbildung einer individuell angepassten Luftströmung erforderlich sind. Die Erfindung ermöglicht auch eine einfache Änderung und Regulierung einer Strömungsgeschwindigkeit der Raumluft für biologische Versuche in geschlossenen Räumen.

Erfindungsgemäß ist die Strömungsführungseinrichtung aus einem Flügel ausgebildet, der an dem Regal befestigt ist, wobei der Flügel über ein seitliches Ende des Tablars und/oder seitliche Abmessungen des Gestells hinaus in den Innenraum ragt. Wenn dann die vertikale Zuluftströmung entlang dem Regal bzw. dem Gestell ausgebildet ist, kann über den Flügel, der das Tablar, das Gestell oder das Regal seitlich überragt, ein Teil der vertikalen Luftströmung in den Aufnahmeraum leicht umgelenkt werden.

Das Regal kann als ein Wagen mobil ausgebildet sein. Das Regal kann prinzipiell mobil oder fest mit einem Untergrund verbunden sein. Das Regal kann zur Ausbildung des Wagens beispielsweise Rollen aufweisen, so dass das Regal leicht auf einem Untergrund im Innenraum durch Verschieben in Art eines Rollwagens bewegt werden kann.

Besonders vorteilhaft ist es, wenn das Regal allseitig offen ausgebildet ist. Das Regal kann dann ausschließlich aus dem Gestell aus den vertikal angeordneten Ständern und den Tablaren, die an dem Gestell befestigt sind, ausgebildet sein.

An gegenüberliegenden Enden des Regals oder des Aufnahmeraums kann je eine Strömungsführungseinrichtung befestigt sein. Dadurch wird es möglich, nicht nur eine Zuluftströmung durch das Regal hindurchzuführen, sondern auch eine Abluftströmung aus dem Regal heraus in eine gewünschte Richtung zu leiten. Unerwünschte Turbulenzen innerhalb des Innenraums können so weitestgehend vermieden werden.

Den Tablaren können je eine Strömungsführungseinrichtung, bevorzugt zwei Strömungsführungseinrichtungen, besonders bevorzugt vier Strömungsführungseinrichtungen zugeordnet sein. Demnach kann die Strömungsführungseinrichtung zwar an dem Tablar befestigt sein, es besteht jedoch auch die Möglichkeit, dass die Strömungsführungseinrichtung an anderer Stelle des Wagens bzw. des Regals befestigt ist. So kann dann auch eine Mehrzahl von Strömungsführungseinrichtungen dazu dienen, die vertikale Zuluftströmung in eine horizontale Luftströmung in einem Aufnahmeraum umzulenken.

Mittels einer weiteren Strömungsführungseinrichtung kann die horizontale Luftströmung in dem Aufnahmeraum in eine vertikale Abluftströmung in dem Innenraum umgelenkt werden. So kann dann auch sichergestellt werden, dass eine geregelte Abluftführung in dem Innenraum ohne große Turbulenzen erfolgt.

An dem Tablar kann eine Beleuchtungseinrichtung zur Beleuchtung des Aufnahmeraums angeordnet sein. Beispielsweise kann die Beleuchtungseinrichtung aus einer Vielzahl von Leuchtmitteln bestehen, die in einer oder mehreren Leuchten verbaut sind, wobei die Leuchten vorzugsweise unterhalb eines über dem Aufnahmeraum befindlichen Tablars angeordnet sein können. So kann eine direkte Beleuchtung von Organismen von oben erfolgen. Die Leuchtmittel können LED-Leuchtmittel sein, wobei auch andere Leuchtmittel verwendet werden können. Eine Abführung von Abwärme der Leuchtmittel kann durch die ausgebildete horizontale Luftströmung sehr einfach realisiert werden, wenn dies erforderlich sein sollte.

Besonders einfach ist die Strömungsführungseinrichtung ausbildbar, wenn der Flügel an dem Gestell befestigt ist. Der bzw. die Flügel können dann unabhängig von den Tablaren einfach an dem Gestell befestigt werden. Wenn die Ständer des Gestells jeweils aus einem Profilelement ausgebildet sind, kann der Flügel einfach durch Verschrauben oder Einhängen in dem Profilelement befestigt werden.

So wird es dann auch einfach möglich, eine Position des Flügels an dem Gestell in vertikaler Richtung zu verändern. Ein Flügel kann dann an unterschiedliche Abstände von Tablaren leicht angepasst werden. Sind mehrere Flügel je Aufnahmeraum vorgesehen, kann auch hier durch eine Höhenverstellung der Flügel an dem Gestell eine optimale Höhe für die horizontale Luftströmung relativ zu den auf dem Tablar befindlichen Organismen, wie beispielsweise Pflanzen, die eine unterschiedliche Höhe aufweisen können, ausgebildet werden.

Der Flügel kann in seiner in den Innenraum ragenden Länge veränderbar sein. So kann dann auch eine Fläche des Flügels vergrößert oder verkleinert werden, je nachdem, ob ein verminderter oder ein erhöhter Durchsatz an Raumluft in den Aufnahmeraum gewünscht ist.

Weiter kann der Flügel um eine Achse schwenkbar an dem Regal befestigt sein. Dadurch wird es möglich, den Flügel in einem Winkel relativ zu der vertikalen Luftströmung bzw. zu dem jeweils zugeordneten Tablar zu positionieren und so ebenfalls einen mehr oder weniger großen Anteil der vertikalen Zuluftströmung in den Aufnahmeraum umzuleiten. Beispielsweise kann es auch dann vorgesehen sein, an dem Regal angeordnete Flügel in jeweils unterschiedlichen Winkeln zu verschwenken, um bei einer abnehmenden vertikalen Zuluftströmung für die jeweiligen Aufnahmeräume eine jeweils gleich verteilte horizontale Luftströmung zu erhalten.

In einer besonders einfachen Ausführungsform kann der Flügel von einer Platte ausgebildet sein. Die Platte kann beispielsweise aus einem Metallblech oder aus Kunststoff bestehen.

Die Platte kann ein Lochraster aufweisen, gebogen und/oder mit einer Serration ausgebildet sein. Die Serration kann zacken- oder fingerförmig ausgebildet sein, wodurch Turbulenzen vorteilhaft vermieden werden können. Weiter kann die Platte eben ausgebildet sein, wobei es auch möglich ist, die Platte gebogen, das heißt mit einem regelmäßigen oder unregelmäßigen Radius auszubilden.

Die Platte kann besonders einfach an dem Regal befestigt werden, wenn an Längsenden der Platte jeweils ein orthogonal zu einer Strömungsführungsfläche der Platte angeordnete Rippe ausgebildet ist, wobei die Rippe ein Langloch aufweisen kann, wobei die Platte mittels einer Schraube an dem Langloch mit dem Gestell oder dem Tablar verbunden sein kann. Wenn die Platte beispielsweise ein Metallblech ist, kann die Rippe einfach durch Abkanten des Metallblechs ausgebildet werden. Das Langloch kann dann auch ein einfaches Verschieben der Platte an der Schraube ermöglichen. Die Platte kann dann einfach verschwenkt oder mit einer in den Innenraum ragenden Länge verstellt werden. Anstelle der Schraube können auch andere Befestigungsmittel verwendet werden. Zur schnellen Verstellung der Platte kann auch ein Klemmhebel oder eine Flügelmutter an einer Schraube genutzt werden.

Vorzugsweise kann die Klimavorrichtung an einer Decke des Innenraums angeordnet sein. Prinzipiell ist es jedoch auch möglich, die Klimavorrichtung außerhalb des Innenraums oder in einem Boden des Innenraums anzuordnen. Wesentlich ist hier eine Lage der Luftauslässe und der Lufteinlässe der Klimavorrichtung. Die Anordnung der Klimavorrichtung an der Decke ist besonders kostengünstig und einfach realisierbar.

Luftauslässe der Klimavorrichtung zur Ausbildung der vertikalen Zuluftströmung können benachbart von Seitenwänden des Innenraums angeordnet sein, wobei Lufteinlässe zum Ansaugen von Raumluft in einer Raummitte angeordnet sein können. Prinzipiell ist aber auch eine umgekehrte Anordnung mit den Luftauslässen in der Raummitte und den Lufteinlässen an den Seitenwänden möglich. Die Seitenwände des Innenraums können vorteilhaft zur Strömungsführung genutzt werden.

Luftauslässe der Klimavorrichtung können zur Ausbildung der vertikalen Zuluftströmung und Luftauslässe zum Ansaugen von Raumluft des Innenraums an einer Decke des Innenraums angeordnet und voneinander beabstandet sein, wobei zwischenliegend den Luftauslässen und den Lufteinlässen zumindest ein Regal positioniert sein kann. Beispielsweise können die Luftauslässe und die Lufteinlässe jeweils in Reihen angeordnet sein, wobei dann eine Anzahl Regale zwischen den Reihen positioniert werden kann. Die Regale stören dann keine vertikale Luftströmung und eine Verteilung der vertikalen Zuluftströmung. Auch wird eine gesammelte Abführung einer vertikalen Abluftströmung so vereinfacht. Prinzipiell ist es jedoch auch möglich, die Luftauslässe und/oder die Lufteinlässe in einem Boden des Innenraums zu integrieren, wenn die Anordnung der Klimavorrichtung dies zulässt.

Mittels der Klimavorrichtung können eine Lufttemperatur und/oder eine Luftfeuchte der Raumluft regelbar sein. So kann die Raumluft stets an die Anforderungen der jeweils im Raum befindlichen Organismen angepasst werden.

Bei dem erfindungsgemäßen Verfahren zur Kultivierung von biologischen Organismen, wie Pflanzen, Insekten, maritime Lebewesen oder dergleichen, in einem Innenraum eines Raums wird mit einer Klimavorrichtung des Raums eine Raumluft konditioniert und in dem Innenraum zumindest ein Regal des Raums angeordnet, wobei mittels der Klimavorrichtung eine vertikale Zuluftströmung in dem Innenraum ausgebildet wird, wobei das Regal aus einem Gestell aus vertikal angeordneten Ständern und einer Mehrzahl von an den Ständern horizontal in einem Abstand übereinander angeordneten Tablaren mit darauf aufgenommenen Organismen ausgebildet ist, wobei die Raumluft durch eine jeweils von den Tablaren begrenzten Aufnahmeraum für die Organismen strömt, wobei mittels einer Strömungsführungseinrichtung des Regals die vertikale Zuluftströmung zumindest teilweise in eine horizontale Luftströmung in dem Aufnahmeraum umgelenkt wird, wobei die Strömungsführungseinrichtung aus einem Flügel ausgebildet ist, der an dem Regal befestigt ist, wobei der Flügel über ein seitliches Ende des Tablars und/oder seitliche Abmessungen des Gestells hinaus in den Innenraum ragt. Hinsichtlich der Vorteile des erfindungsgemäßen Verfahrens wird auf die Vorteilsbeschreibung des erfindungsgemäßen Raums verwiesen.

Weitere vorteilhafte Ausführungsformen des Verfahrens ergeben sich aus den Merkmalen der auf den Vorrichtungsanspruch 1 rückbezogenen Unteransprüche.

Im Folgenden wird eine Ausführungsform der Erfindung unter Bezugnahme auf die beigefügten Zeichnungen näher erläutert.

Es zeigen:
- **Fig. 1**: eine schematische Schnittansicht eines Raums;
- **Fig. 2**: eine Vorderansicht eines Regals mit einer Strömungsführung seinrichtung ;
- **Fig. 3**: eine weitere Vorderansicht eines Ausschnitts des Regals;
- **Fig. 4**: eine Detailansicht der Strömungsführungseinrichtung.

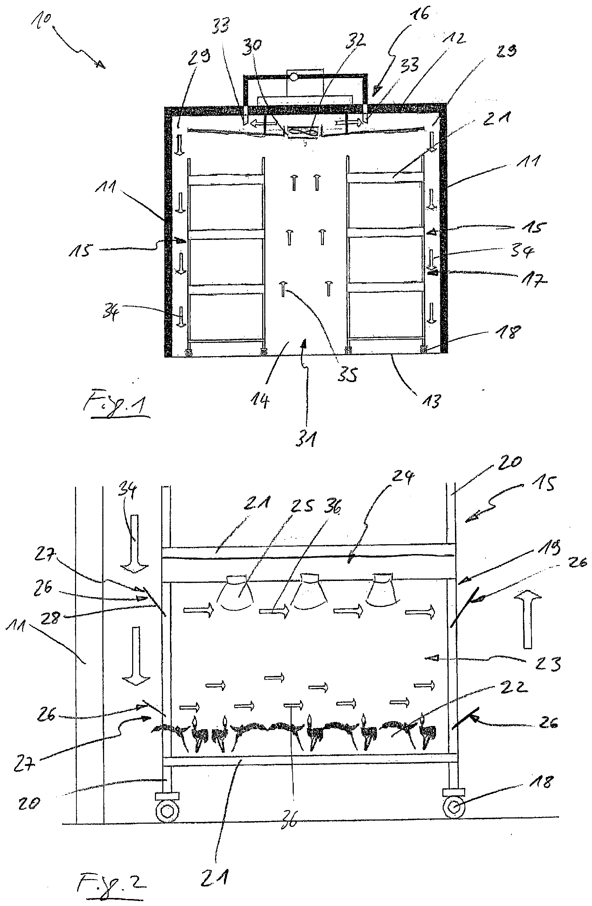

Eine Zusammenschau der **Fig. 1** bis **4** zeigt einen Raum 10, mit Wänden 11, einer Decke 12 und einem Boden 13, in dessen Innenraum 14 eine Anzahl als Wagen 15 ausgebildete Regale 17 aufgestellt und mit einer Klimavorrichtung 16 des Raums 10, die hier an der Decke 12 angeordnet ist, mit konditionierter Raumluft versorgt wird. Der Wagen 15 ist aus dem Regal 17 mit Rollen 18 ausgebildet, wobei das Regal 17 aus einem Gestell 19 aus vertikal angeordneten Ständern 20 und einer Mehrzahl von an den Ständern 20 horizontal in einem Abstand übereinander angeordneten Tablaren 21 ausgebildet ist. Auf den Tablaren 21 sind biologische Organismen, insbesondere hier dargestellte Pflanzen 22, angeordnet. Zwischenliegend den Tablaren 21 ist ein Aufnahmeraum 23 für die Pflanzen 22 ausgebildet. Weiter ist an einigen Tablaren 21 eine Beleuchtungseinrichtung 24 mit Leuchten 25 zur Beleuchtung der Pflanzen 22 angeordnet. An den Ständern 20 des Gestells 19 ist darüber hinaus eine Anzahl jeweils von einem Flügel 26 ausgebildeten Strömungsführungseinrichtungen 27 befestigt. Die Flügel 26 sind jeweils durch eine Platte 28 ausgebildet.

Die an der Decke 12 angeordnete Klimavorrichtung 16 weist Luftauslässe 29 benachbart der Wände 11 und Lufteinlässe 30 in einer Raummitte 31 des Innenraums 14 auf. Weiter ist die Klimavorrichtung 16 aus einem Lüfter 32 zum Fördern der Raumluft und einem Wärmetauscher 33 zur Behandlung der Raumluft bzw. Temperierung ausgebildet. Bei einem Betrieb des Lüfters 32 strömt aus den Luftauslässen 29 Raumluft aus, die eine vertikale Zuluftströmung 34, die hier mit Pfeilen angedeutet ist, ausbildet. Eine vertikale Abluftströmung 35 in dem Innenraum 14 gelangt dann zurück zum Lüfter 32 bzw. die Lufteinlässe 30.

Wie der näheren Darstellung in der **Fig. 2** zu entnehmen ist, sind an den Wagen 15 bzw. den Ständern 20 die Platten 28 angebracht, die in die vertikale Zuluftströmung 34 hineinragen und so ein Umlenken der vertikalen Zuluftströmung 34 in eine horizontale Luftströmung 36 durch den Aufnahmeraum 23 hindurch ausbilden. Beim Austreten der horizontalen Luftströmung 36 aus dem Aufnahmeraum 23 wird aufgrund der dort an den Ständer 20 angebrachten Platten 28 die horizontale Luftströmung 36 in die vertikale Abluftströmung 35 umgeleitet.

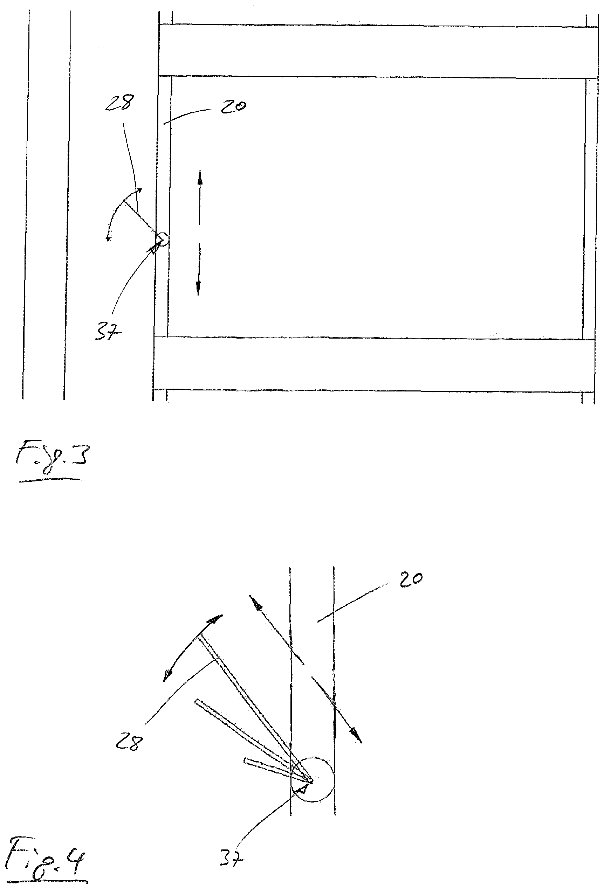

Wie aus der **Fig. 3** zu ersehen ist, kann die Platte 28 an dem Ständer 20 in einer Höhe verstellt sowie um eine Achse 37 verschwenkt werden. Darüber hinaus kann, wie in **Fig. 4** dargestellt, die Platte 28 in ihrer in den Innenraum 14 ragenden Länge verändert werden. Die **Fig. 4** zeigt mögliche Einstellungen der Platte 28. Dadurch wird es möglich, die horizontale Luftströmung 36 entsprechend der Erfordernisse der Pflanzen 22 individuell anzupassen.

## Patentansprüche

1. Raum (10) zur Kultivierung biologischer Organismen, wie Pflanzen, Insekten, maritime Lebewesen oder dergleichen, mit einer Klimavorrichtung (16) zur Konditionierung einer Raumluft und zumindest einem in einem Innenraum (14) des Raums angeordneten Regals (17), wobei mittels der Klimavorrichtung eine vertikale Zuluftströmung (34) in dem Innenraum ausbildbar ist, wobei das Regal aus einem Gestell (19) aus vertikal angeordneten Ständern (20) und einer Mehrzahl von an den Ständern horizontal in einem Abstand übereinander angeordneten Tablaren (21) zur Aufnahme von Organismen (22) ausgebildet ist, wobei das Regal derart offen ausgebildet ist, dass die Raumluft durch einen jeweils von den Tablaren begrenzten Aufnahmeraum (23) für die Organismen strömen kann,
wobei
das Regal eine Strömungsführungseinrichtung (27) aufweist, mittels der die vertikale Zuluftströmung zumindest teilweise in eine horizontale Luftströmung (36) in dem Aufnahmeraum umlenkbar ist, wobei die Strömungsführungseinrichtung aus einem Flügel (26) ausgebildet ist, der an dem Regal befestigt ist, **dadurch gekennzeichnet, dass** der Flügel über ein seitliches Ende des Tablars und/oder seitliche Abmessungen des Gestells hinaus in den Innenraum ragt.

2. Raum nach Anspruch 1,
**dadurch gekennzeichnet,**
**dass** das Regal (17) als ein Wagen (15) mobil ausgebildet ist.

3. Raum nach Anspruch 1 oder 2,
**dadurch gekennzeichnet,**
**dass** das Regal (17) allseitig offen ausgebildet ist.

4. Raum nach einem der vorangehenden Ansprüche,
**dadurch gekennzeichnet,**
**dass** an gegenüberliegenden Enden des Regals (17) oder Aufnahmeraums (23) je eine Strömungsführungseinrichtung (27) befestigt ist.

5. Raum nach einem der vorangehenden Ansprüche,
**dadurch gekennzeichnet,**
**dass** den Tablaren (21) je eine Strömungsführungseinrichtung (27), bevorzugt zwei Strömungsführungseinrichtungen, besonders bevorzugt vier Strömungsführungseinrichtungen zugeordnet sind.

6. Raum nach einem der vorangehenden Ansprüche,
**dadurch gekennzeichnet,**
**dass** mittels einer weiteren Strömungsführungseinrichtung (27) die horizontale Luftströmung (36) in dem Aufnahmeraum (23) in eine vertikale Abluftströmung (35) in dem Innenraum (14) umlenkbar ist.

7. Raum nach einem der vorangehenden Ansprüche,
**dadurch gekennzeichnet,**
**dass** an dem Tablar (21) eine Beleuchtungseinrichtung (24) zur Beleuchtung des Aufnahmeraums (23) angeordnet ist.

8. Raum nach einem der vorangehenden Ansprüche,
**dadurch gekennzeichnet,**
**dass** der Flügel (26) an dem Gestell (19) befestigt ist.

9. Raum nach einem der vorangehenden Ansprüche,
**dadurch gekennzeichnet,**
**dass** eine Position des Flügels (26) an dem Gestell (19) in vertikaler Richtung veränderbar ist.

10. Raum nach einem der vorangehenden Ansprüche,
**dadurch gekennzeichnet,**
**dass** der Flügel (26) in seiner in den Innenraum (14) ragenden Länge veränderbar ist.

11. Raum nach einem der vorangehenden Ansprüche,
**dadurch gekennzeichnet,**
**dass** der Flügel (26) um eine Achse (37) schwenkbar an dem Regal (17) befestigt ist.

12. Raum nach einem der vorangehenden Ansprüche,
**dadurch gekennzeichnet,**
**dass** der Flügel (26) von einer Platte (28) ausgebildet ist.

13. Raum nach Anspruch 12,
**dadurch gekennzeichnet,**
**dass** die Platte (28) ein Lochraster aufweist, gebogen und/oder mit einer Serration ausgebildet ist.

14. Raum nach Anspruch 12 oder 13,
**dadurch gekennzeichnet,**
**dass** an Längsenden der Platte (28) jeweils ein orthogonal zu einer Strömungsführungsfläche der Platte angeordnete Rippe ausgebildet ist, wobei die Rippe ein Langloch aufweist, wobei die Platte mittels einer Schraube an dem Langloch mit dem Gestell (19) oder dem Tablar (21) verbunden ist.

15. Raum nach einem der vorangehenden Ansprüche,
**dadurch gekennzeichnet,**
**dass** die Klimavorrichtung (16) an einer Decke (12) des Innenraums (14) angeordnet ist.

16. Raum nach einem der vorangehenden Ansprüche,
**dadurch gekennzeichnet,**
**dass** Luftauslässe (29) der Klimavorrichtung (16) zur Ausbildung der vertikalen Zuluftströmung (34) benachbart von Seitenwänden (11) des Innenraums (14) angeordnet sind, wobei Lufteinlässe (30) zum Ansaugen von Raumluft in einer Raummitte (31) angeordnet sind.

17. Raum nach einem der vorangehenden Ansprüche,
**dadurch gekennzeichnet,**
**dass** Luftauslässe (29) der Klimavorrichtung (16) zur Ausbildung der vertikalen Zuluftströmung (34) und Lufteinlässe (30) zum Ansaugen von Raumluft des Innenraums (14) an einer Decke (12) des Innenraums angeordnet und voneinander beabstandet sind, wobei zwischenliegend den Luftauslässen und den Lufteinlässen zumindest ein Regal (17) positioniert ist.

18. Raum nach einem der vorangehenden Ansprüche,
**dadurch gekennzeichnet,**
**dass** mittels der Klimavorrichtung (16) eine Lufttemperatur und/oder eine Luftfeuchte der Raumluft regelbar ist.

19. Verfahren zur Kultivierung von biologischen Organismen, wie Pflanzen, Insekten, maritime Lebewesen oder dergleichen, in einem Innenraum (14) eines Raums (10), wobei mit einer Klimavorrichtung (16) des Raums eine Raumluft konditioniert und in dem Innenraum zumindest ein Regal (17) des Raums angeordnet wird, wobei mittels der Klimavorrichtung eine vertikale Zuluftströmung (34) in dem Innenraum ausgebildet wird, wobei das Regal aus einem Gestell (19) aus vertikal angeordneten Ständern (20) und einer Mehrzahl von an den Ständern horizontal in einem Abstand übereinander angeordneten Tablaren (21) mit darauf aufgenommenen Organismen (22) ausgebildet ist, wobei die Raumluft durch einen jeweils von den Tablaren begrenzten Aufnahmeraum (23) für die Organismen strömt,
**dadurch gekennzeichnet,**
**dass** mittels einer Strömungsführungseinrichtung (27) des Regals die vertikale Zuluftströmung zumindest teilweise in eine horizontale Luftströmung (36) in dem Aufnahmeraum umgelenkt wird, wobei die Strömungsführungseinrichtung aus einem Flügel (26) ausgebildet ist, der an dem Regal befestigt ist, wobei der Flügel über ein seitliches Ende des Tablars und/oder seitliche Abmessungen des Gestells hinaus in den Innenraum ragt.

## Claims

1. A space (10) for cultivating biological organisms, such as plants, insects, marine life or the like, the space (10) having an air conditioning device (16) for conditioning ambient air and at least one shelf (17) disposed in an interior (14) of the space, a vertical supply-air current (34) being realized in the interior by means of the air conditioning device, the shelf being made of a frame (19) made of vertically disposed racks (20) and a plurality of superjacent shelf boards (21) disposed horizontally on the racks at intervals and intended for receiving organisms (22), the shelf having an open design so that the ambient air flows through a receiving space (23) intended for the organisms and limited by the shelf boards, the shelf having a flow guide element (27) by means of which the vertical supply-air current is deflected at least partially to a horizontal air current (36) in the receiving space, the flow guide element being made of a fin (26) which is fastened to the shelf,
**characterized in that**
the fin protrudes into the interior over a lateral end of the shelf board and/or lateral dimensions of the frame.

2. The space according to claim 1,
**characterized in that**
the shelf (17) is designed as a cart (15).

3. The space according to claim 1 or 2,
**characterized in that**
the shelf (17) is designed to be open on all sides.

4. The space according to any one of the preceding claims,
**characterized in that**
a flow guide element (27) each is fastened on opposite ends of the shelf (17) or the receiving space (23).

5. The space according to any one of the preceding claims,
**characterized in that**
one flow guide element (27), preferably two flow guide elements, particularly preferably four flow guide elements, are assigned to each shelf board (21).

6. The space according to any one of the preceding claims,
**characterized in that**
the horizontal air current (36) in the receiving space (23) is deflected to a vertical waste-air current (35) in the interior (14) by means of another flow guide element (35).

7. The space according to any one of the preceding claims,
**characterized in that**
a lighting element (24) for lighting the receiving the space (23) is disposed on the shelf board (21).

8. The space according to any one of the preceding claims,
**characterized in that**
the fin (26) is fastened to the frame (19).

9. The space according to any one of the preceding claims,
**characterized in that**
a position of the fin (26) on the frame (19) is changeable in the vertical direction.

10. The space according to any one of the preceding claims,
**characterized in that**
the length of the fin (26) protruding into the interior (14) is changeable.

11. The space according to any one of the preceding claims,
**characterized in that**
the fin (26) is fastened to the shelf (17) so as to be pivotable about an axis (37).

12. The space according to any one of the preceding claims,
**characterized in that**
the fin (26) is made of a plate (28).

13. The space according to claim 12,
**characterized in that**
the plate (28) has a hole grid, is curved and/or has serrations.

14. The space according to claim 12 or 13,
**characterized in that**
a rib, which is disposed orthogonally to a flow guide element surface of the plate (28), is formed on each longitudinal end of the plate, the rib having an oblong hole, the plate being connected to the frame (19) or the shelf board (21) by the oblong hole by means of a screw.

15. The space according to any one of the preceding claims,
**characterized in that**
the air conditioning device (16) is disposed on a ceiling (12) of the interior (14).

16. The space according to any one of the preceding claims,
**characterized in that**
air outlets (29) of the air conditioning device (16) for forming the vertical supply-air flow (34) are disposed adjacent to lateral walls (11) of the interior (14), air inlets (30) for suctioning ambient air being disposed in a space centre (31).

17. The space according to any one of the preceding claims,
**characterized in that**
air outlets (29) of the air conditioning device (16) for forming the vertical supply-air flow (34) and air inlets (30) for suctioning ambient air in the interior (14) are disposed on a ceiling (12) of the interior at a distance to each other, at least one shelf (17) being positioned between the air outlets and the air inlets.

18. The space according to any one of the preceding claims,
**characterized in that**
an air temperature and/or an air humidity of the ambient air is controlled by means of the air conditioning device (16).

19. A method for cultivating biological organisms, such as plants, insects, marine life or the like, in an interior (14) of a space (10), ambient air being conditioned using an air conditioning device (16) and at least one shelf (17) of the space being disposed in the interior, a vertical supply-air current (34) being realized in the interior by means of the air conditioning device, the shelf being made of a frame (19) of vertically disposed racks (20) and a plurality of superjacent shelf boards (21) disposed horizontally on the racks at intervals and having received organisms (22) thereon, the ambient air flowing through a receiving space (23) for the organisms which is limited by the shelf boards,
**characterized in that**
the vertical supply-air current is deflected at least partially to a horizontal air current (36) in the receiving space by means of a flow guide element (27) of the shelf, the flow guide element being made of a fin (26), which is fastened to the shelf, the fin protruding into the interior via a lateral end of the shelf board and/or lateral dimensions of the rack.

## Revendications

1. Espace (10) pour la culture des organismes biologiques, par exemple des plantes, des insectes, la vie marine ou quelque chose du genre, l'espace (10) ayant une unité de climatisation (16) pour la climatisation de l'air ambiant et au moins un rayonnage (17) disposé dans un intérieur (14) de l'espace, un écoulement vertical (34) de l'air frais étant réalisé dans l'intérieur au moyen de l'unité de climatisation, le rayonnage étant fait d'un cadre (19) fait de pieds (20) disposés verticalement et une pluralité des étagères (21) sus-jacentes et disposées horizontalement sur les pieds et espacées régulièrement et prévues pour la réception des organismes (22), le rayonnage ayant un dessin ouvert afin que l'air ambiant écoule par un espace de réception (23) prévu pour les organismes et limité par les étagères, le rayonnage ayant un élément de guidage d'écoulement (27) au moyen duquel l'écoulement vertical de l'air frais est dévié au moins en partie à un écoulement horizontal (36) de l'air dans l'espace de réception, l'élément de guidage d'écoulement étant fait d'un vantail (26) qui est fixé au rayonnage,
**caractérisé en ce que**
le vantail fait saillie dans l'intérieur par un extrémité latéral de l'étagère et/ou par des dimensions latéraux du cadre.

2. Espace selon la revendication 1,
**caractérisé en ce que**
le rayonnage (17) est dessiné comme chariot (15).

3. Espace selon la revendication 1 ou 2,
**caractérisé en ce que**
le rayonnage (17) est conçu pour être ouvert sur tous le côtés.

4. Espace selon l'une quelconque des revendications précédentes,
**caractérisé en ce**
**qu'**un élément de guidage d'écoulement (27) est fixé sur chaque extrémité opposé du rayonnage (17) ou de l'espace de réception (23).

5. Espace selon l'une quelconque des revendications précédentes,
**caractérisé en ce**
**qu'**un élément de guidage d'écoulement (27), de préférence deux éléments de guidage d'écoulement, de préférence particulier quatre éléments de guidage d'écoulement, sont associés à chaque étagère (21).

6. Espace selon l'une quelconque des revendications précédentes,
**caractérisé en ce que**
l'écoulement horizontal (36) de l'air dans l'espace de réception (23) est dévié à un écoulement horizontal (35) de l'air vicié dans l'intérieur (14) au moyen d'un autre élément de guidage d'écoulement (35).

7. Espace selon l'une quelconque des revendications précédentes,
**caractérisé en ce**
**qu'**un élément d'illumination (24) pour illuminer l'espace de réception (23) est disposé sur l'étagère (21).

8. Espace selon l'une quelconque des revendications précédentes,
**caractérisé en ce que**
le vantail (26) est fixé au cadre (19).

9. Espace selon l'une quelconque des revendications précédentes,
**caractérisé en ce**
**qu'**une position du vantail (26) sur le cadre (19) est changeable en sens vertical.

10. Espace selon l'une quelconque des revendications précédentes,
**caractérisé en ce que**
la longueur du vantail (26) faisant saillie dans l'intérieur (14) est changeable.

11. Espace selon l'une quelconque des revendications précédentes,
**caractérisé en ce que**
le vantail (26) est fixé au rayonnage (17) de telle manière d'être pivoté autour d'un axe (37).

12. Espace selon l'une quelconque des revendications précédentes,
**caractérisé en ce que**
le vantail (26) est fait d'une plaque (28).

13. Espace selon la revendication 12,
**caractérisé en ce que**
la plaque (28) est une plaque perforée, est courbée et/ou est dentelée.

14. Espace selon la revendication 12 ou 13,
**caractérisé en ce**
**qu'**une ailette, qui est disposée orthogonalement à une surface de guidage d'écoulement de la plaque (28), est formée sur chaque extrémité longitudinale de la plaque, l'ailette ayant un trou oblong, la plaque étant reliée au cadre (19) ou à l'étagère (21) par le trou oblong au moyen d'un vis.

15. Espace selon l'une quelconque des revendications précédentes,
**caractérisé en ce que**
l'unité de climatisation (16) est disposée sur un plafond (12) de l'intérieur (14).

16. Espace selon l'une quelconque des revendications précédentes,
**caractérisé en ce que**
des sorties d'air (29) de l'unité de climatisation (16) pour la formation de l'écoulement vertical (34) de l'air frais sont disposées de manière adjacente aux parois latérales (11) de l'intérieur (14), des entrées d'air (30) pour l'aspiration de l'air ambiant étant disposées dans le centre d'espace (31).

17. Espace selon l'une quelconque des revendications précédentes,
**caractérisé en ce que**
des sorties d'air (29) de l'unité de climatisation (16) pour la formation de l'écoulement (34) de l'air frais et des entrées d'air (30) pour l'aspiration de l'air ambiant de l'intérieur (14) sont disposées sur un plafond (12) de l'intérieur et sont espacées l'une de l'autre, au moins un rayonnage (17) étant positionné entre les sorties d'air et les entrées d'air.

18. Espace selon l'une quelconque des revendications précédentes,
**caractérisé en ce**
**qu'**une température d'air ambiant et/ou une humidité d'air ambiant est/sont commandée(s) au moyen de l'unité de climatisation (16).

19. Procédé pour la culture des organismes biologiques, par exemple des plantes, des insectes, la via marine ou quelque chose du genre, dans un intérieur (14) d'un espace (10), de l'air ambiant étant climatisé en utilisant une unité de climatisation (16) et au moins un rayonnage (17) de l'espace étant disposé dans l'intérieur, un écoulement vertical (34) de l'air frais étant réalisé dans l'intérieur au moyen de l'unité de climatisation, le rayonnage étant fait d'un cadre (19) fait des pieds (20) disposés verticalement et d'une pluralité des étagères (21) sus-jacentes et disposées horizontalement sur les pieds et espacées régulièrement et ayant des organismes (22) y reçus, l'air ambiant écoulant par un espace de réception (23) pour les organismes qui est limité par les étagères,
**caractérisé en ce que**
l'écoulement vertical de l'air frais est dévié au moins en partie à un écoulement horizontal (36) de l'air dans l'espace de réception au moyen d'un élément de guidage d'écoulement (27) du rayonnage, l'élément de guidage d'écoulement étant fait d'un vantail (26), qui est fixé au rayonnage, le vantail faisant saillie dans l'intérieur par un extrémité de l'étagère et/ou des dimensions latérales du cadre.
